# FASCICULE DE BREVET EUROPEEN

(11) **EP 2 196 948 B1**
(45) Date de publication et mention de la délivrance du brevet: **19.10.2011**
(21) Numéro de dépôt: 09178424.9
(22) Date de dépôt: 08.12.2009
(51) Int. Cl.: G06K 19/00, G06K 19/07, H04B 5/00

(54) **Objet portatif couplé inductivement à une station fixe et comportant des moyens de contrôle du gain**
Tragbares Objekt, das induktiv an eine feste Station gekoppelt ist und Mittel zur Verstärkungskontrolle umfasst
Mobile object inductively coupled to a fixed station and including gain control methods

(30) Priorité: 09.12.2008 FR 0806898
(43) Date de publication de la demande: 16.06.2010
(73) Titulaire: Commissariat à l'Énergie Atomique et aux Énergies Alternatives, 75015 Paris (FR)
(72) Inventeur: Gomez, Bertrand, 38240 Meylan (FR); Colinet, Eric, 38240 Meylan (FR)
(74) Mandataire: de Jong, Jean Jacques

(56) Documents cités:
- EP-A- 1 914 669
- FR-A- 2 776 865
- FR-A- 2 859 842

## Description

### Domaine technique de l'invention

L'invention est relative à un objet portatif muni d'une antenne couplée inductivement à une station fixe d'un dispositif de télétransmission, l'objet portatif comportant une impédance de charge variable et un redresseur, connectés en parallèle aux bornes de l'antenne, une boucle de régulation de la tension aux bornes de l'impédance de charge, connectée entre la sortie du redresseur et une borne de commande de l'impédance de charge, la boucle de régulation comportant, en série, des moyens de détermination d'une différence entre une tension de consigne et la tension de sortie du redresseur, un convertisseur analogique-numérique, à un bit, et des moyens de commande de type intégrateur, des moyens de démodulation étant connectés à la sortie du convertisseur.

### État de la technique

Dans le domaine de la télémétrie, le couplage inductif entre une antenne d'un objet portatif et l'antenne d'une station de base est couramment utilisé. La station de base émet un champ magnétique qui est reçu par l'antenne de l'objet portatif et traité. Dans la plupart des cas, l'objet portatif est téléalimenté et le couplage inductif doit permettre notamment d'alimenter l'objet portatif et de recueillir des données émises par la station de base.

Ainsi, le circuit électronique embarqué dans l'objet portatif doit convertir l'énergie du champ magnétique émis par l'antenne de la station de base en un courant continu nécessaire à l'alimentation de l'objet tout en démodulant le signal reçu pour assurer la communication d'informations entre l'objet et la station de base.

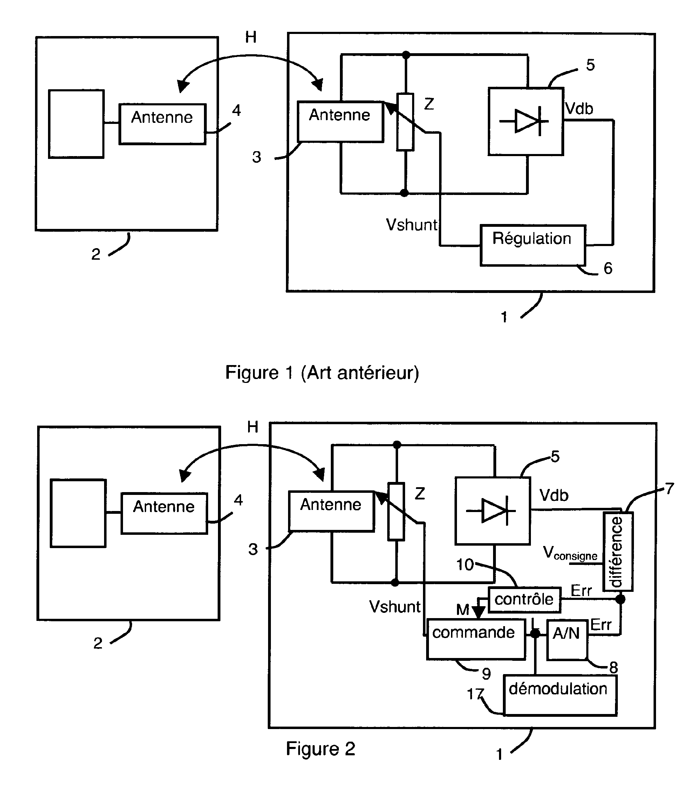

Comme illustré à la figure 1, un objet portatif couplé inductivement à une station fixe est connu et décrit dans de multiples publications. L'énergie du champ magnétique H émis par l'antenne 4 de la station de base 2 est reçu par l'antenne 3 de l'objet portatif et permet son alimentation en énergie. Une impédance Z de charge variable et un redresseur 5 sont connectés en parallèle aux bornes de l'antenne 3. L'objet portatif 1 comporte une boucle de régulation 6 connectée entre le redresseur 5 et une borne de commande de l'impédance Z de charge variable. Le document WO 2005/029726, de la demanderesse, décrit un mode de réalisation particulier dans lequel la boucle de régulation comporte un convertisseur analogique-numérique connecté en série avec des moyens de commande. De cette manière, la boucle de régulation modifie la tension aux bornes de l'antenne 3 de l'objet portatif 1 en modulant la valeur de l'impédance Z de charge variable. Cette régulation est classiquement réalisée par rapport à une tension de consigne.

L'impédance Z de charge variable peut être réalisée par un transistor de type MOSFET, JFET ou bipolaire dont l'électrode de commande est connectée à la sortie des moyens de commande.

Bien que cette architecture présente des avantages, la stabilité de la boucle de régulation doit être améliorée pour permettre à l'objet portatif d'être utilisé, même en cas d'une forte variation de charge ou de champ. De plus, la rapidité de la boucle doit être améliorée afin d'autoriser un fonctionnement à haut débit de communication.

### Objet de l'invention

L'invention a pour objet la réalisation d'un objet portatif qui assure un compromis entre un bon suivi de la tension de consigne et le rejet des perturbations agissant sur la boucle de régulation.

L'objet portatif selon l'invention est caractérisé par les revendication annexées et plus particulièrement par le fait que les moyens de commande comportent une entrée de contrôle de gain, connectée à une sortie de moyens de contrôle du gain recevant en entrée des signaux représentatifs de ladite différence.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, de manière schématique, un mode de réalisation d'un objet portatif selon l'art antérieur,
- la figure 2 représente, de manière schématique, un mode de réalisation particulier d'un objet portatif selon l'invention,
- les figures 3 et 4 représentent, de manière schématique, deux lois de commande reliant le gain (G) de la boucle de régulation à la différence (Err) entre une tension de consigne et une tension à réguler,
- la figure 5 représente, de manière schématique, un second mode de réalisation particulier d'un objet portatif selon l'invention,
- la figure 6 représente, de manière plus détaillée, un mode de réalisation particulier correspondant à la figure 2,
- la figure 7 représente, de manière plus détaillée, un mode de réalisation particulier correspondant à la figure 3.

### Description de modes de réalisation préférentiels de l'invention

Comme illustré à la figure 2, l'objet portatif 1 et la station de base 2 sont couplés inductivement, au moyen de leurs antennes 3 et 4 respectives, pour la transmission de données. Dans l'objet portatif 1, une impédance Z de charge variable et un redresseur 5 sont connectés en parallèle aux bornes de l'antenne 3. L'objet portatif comporte également une boucle de régulation 6 connectée entre le redresseur 5 et une borne de commande de l'impédance Z de charge variable. La boucle de régulation 6 comporte, en série, des moyens 7 de détermination d'une différence Err entre une tension de consigne V_{consigne} et la tension Vdb de sortie du redresseur 5, un convertisseur 8 analogique-numérique et des moyens de commande 9. Les moyens 7 de détermination d'une différence Err entre une tension de consigne V_{consigne} et la tension Vdb de sortie du redresseur 5 sont donc connectés en sortie du redresseur 5 tandis que les moyens de commande 9 sont connectés à l'impédance Z de charge variable. La connexion électrique entre la sortie du convertisseur 8 et l'entrée des moyens de commande est représentée par le noeud électrique L.

De cette manière, la boucle de régulation 6 modifie la tension aux bornes de l'antenne 3 de l'objet portatif, en modulant la valeur de l'impédance Z de charge variable. Cette régulation est classiquement réalisée par rapport à la tension de consigne V_{consigne}.

Le redresseur 5 peut être réalisé par tout circuit approprié permettant de transformer une tension alternative en une tension continue. Le redresseur peut être par exemple, une diode, un pont de diode, des circuits de redressement mono ou bi-alternance.

Les moyens 7 de détermination d'une différence Err sont formés, par exemple, par un comparateur dont les première et seconde bornes d'entrée sont connectées respectivement à la tension de consigne V_{consigne} et à la tension de sortie Vdb du redresseur 5. La différence Err délivrée par les moyens 7 peut être une tension positive ou négative selon que la tension de sortie Vdb du redresseur est supérieure ou inférieure à la tension de consigne V_{consigne}.

La tension délivrée par les moyens 7 de détermination, c'est-à-dire la différence Err, est ensuite appliquée à une entrée du convertisseur 8 analogique-numérique qui transforme alors cette information analogique en un signal numérique qui est représentatif de la différence Err. Le convertisseur 8 délivre à sa sortie un signal numérique, sur un bit, représentatif de la différence Err entre la tension Vdb et la tension de consigne. Le signal numérique délivré par le convertisseur 8 est appliqué à une entrée des moyens de commande 9.

Le convertisseur 8 analogique-numérique peut être à temps continu, c'est-à-dire qu'il délivre en continue une valeur représentative de la différence entre les tensions appliquées à ses bornes d'entrée, ou alors à temps échantillonné, c'est-à-dire qu'il délivre périodiquement une valeur représentative de la différence elle-même mesurée suivant la même période.

La boucle de régulation 6 comporte également un gain adaptatif qui est ajusté en fonction de la différence Err entre la tension de consigne et la tension Vdb à la sortie du redresseur. Pour ce faire, les moyens de commande 9 comportent une entrée M de contrôle de gain, connectée à une sortie de moyens 10 de contrôle du gain recevant en entrée des signaux représentatifs de ladite différence Err. L'entrée M peut être décomposée en une pluralité de sous entrée également appelées M.

Au moyen de la modulation du gain de la boucle de régulation 6, la boucle peut présenter soit un gain élevé, soit un gain plus faible. Dans le cas d'un gain élevé, les oscillations résiduelles sur la tension de sortie Vdb du redresseur sont rejetées à plus haute fréquence ce qui permet d'assurer un bon suivi de la tension de consigne V_{consigne} et un rejet des perturbations. Au contraire, si le gain est faible, l'amplitude des oscillations sur la tension de sortie Vdb du redresseur reste faible.

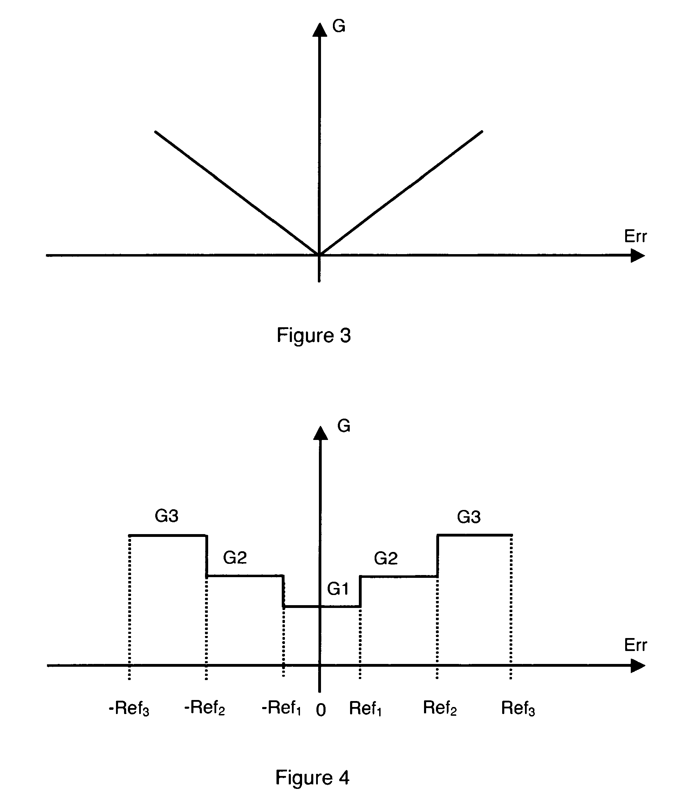

Les moyens 10 de contrôle du gain définissent une loi de commande qui peut être linéaire ou discrète, dans laquelle le gain G augmente lorsque le signal représentatif, par exemple, la différence Err à l'entrée du convertisseur 8 augmente (figure 2). La loi de commande des moyens de contrôle peut être, par exemple, de type linéaire, exponentielle ou de tout autre type adapté généralement croissant avec la valeur absolue de la différence Err. Les figures 3 et 4 illustrent deux lois de commande qui représentent la relation entre le gain G délivré par les moyens 10 de contrôle du gain et la différence Err entre la tension de consigne et la tension Vdb de sortie du redresseur. Sur la figure 3, il existe une relation linéaire entre la valeur du gain G et la différence Err entre la tension de consigne V_{consigne} et la tension à réguler, c'est-à-dire la tension Vdb. De manière plus précise, lorsque la valeur absolue de la différence Err augmente, la valeur du gain G augmente linéairement. Sur la figure 4, la relation entre le gain G et la différence Err est discrétisée, dans le cas présent elle présente trois paliers G1, G2 et G3 associés à des plages prédéfinies de différences Err. Ainsi, si la différence Err est comprise entre -Ref₁ et Ref₁, la valeur du gain G est égale à G₁. Si la différence Err est comprise entre -Ref₂ et -Ref₁ ou entre Ref₁ et Ref₂, la valeur du gain est égale à G2, qui est supérieure à G1.

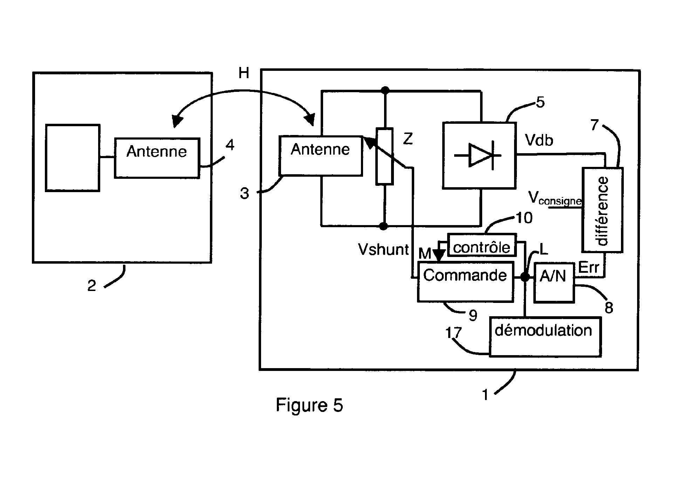

Dans un premier mode de réalisation, illustré à la figure 2, les moyens de commande 9 comportent une entrée M de contrôle de gain, connectée à des moyens 10 de contrôle du gain qui reçoivent en entrée la différence Err entre la tension de consigne et la tension de sortie Vdb du redresseur. Dans un second mode de réalisation, illustré à la figure 5, les moyens 9 de commande comportent une entrée M de contrôle de gain, connectée à une sortie de moyens 10 de contrôle du gain recevant en entrée le signal numérique délivré par le convertisseur 8 analogique-numérique et qui est un signal représentatif de la différence Err.

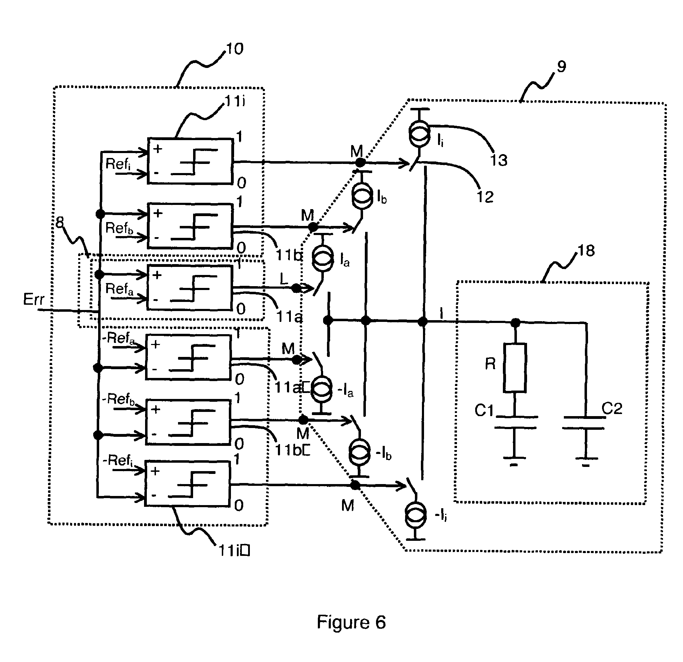

Dans un mode de réalisation particulier, correspondant au premier mode de réalisation et illustré à la figure 6, la différence Err entre la tension de consigne V_{consigne} et la tension Vdb est appliquée à l'entrée d'une pluralité de comparateurs 11.

Chaque comparateur 11 comporte des première et seconde bornes d'entrée et une borne de sortie. La borne de sortie de chaque comparateur 11 est connectée à une borne de commande d'un interrupteur électronique 12 dont l'une de ses deux bornes d'entrée/sortie est connectée à un générateur de courant 13, la borne restante d'entrée/sortie étant connectée à un circuit intégrateur 18 qui est intégré dans les moyens de commande 9. Les comparateurs 11 sont associés chacun à une tension de référence Ref spécifique. Ainsi, les comparateurs 11 réalisent la comparaison entre la tension de référence Ref et la différence Err et ils délivrent une information numérique (0 ou 1) en conséquence. Les comparateurs 11 associés aux tensions de référence Ref définissent, dans les moyens 10 de contrôle du gain, la loi de commande à appliquer.

Ainsi, la figure 6 peut être découpée de la manière suivante, le circuit intégrateur 18, les sources de courant 13 et les interrupteurs électronique 12 qui leurs sont associés appartiennent aux moyens 9 de commande. Les comparateurs 11 associés à leurs tensions de référence Ref appartiennent aux moyens 10 de contrôle. De cette manière, les interrupteurs électronique 12 reçoivent sur leurs entrées de commande, c'est-à-dire sur les entrées M de contrôle de gain des moyens 9 de commande, une information qui provient d'un signal représentatif de la différence entre la tension Vdb de sortie du redresseur 5 et la tension de consigne V_{consigne}. Cependant, le comparateur 11a de la pluralité de comparateur qui est associé à une tension de référence nulle, ici la tension Refa, n'appartient pas aux moyens 10 de contrôle, mais appartient au convertisseur 8 analogique-numérique. Des moyens de démodulations du signal 17 sont alors connectés, sur le noeud L, entre la sortie du comparateur 11a et l'interrupteur électronique 12 qui lui est associé.

Le mode de réalisation particulier, illustré à la figure 6, correspond à une loi de commande discrète comme illustrée à la figure 4. Dans ce mode de réalisation bien particulier, les comparateurs 11 sont alors répartis suivants deux familles (11 et 11') qui comportent exactement le même nombre de comparateurs. Dans la première famille de comparateurs 11, la différence Err entre la tension de consigne et la tension de sortie Vdb du redresseur est appliquée sur la première borne d'entrée de chaque comparateur, par exemple la borne plus. Dans la deuxième famille de comparateurs 11', la différence Err entre la tension de consigne et la tension de sortie Vdb du redresseur est appliquée sur la seconde borne d'entrée de chaque comparateur 11, par exemple la borne moins. Dans chacune des familles, la borne d'entrée restant libre de chaque comparateur est alors connectée à une tension de référence spécifique Refᵢ. Au moins une tension de référence, ici Refa, est nulle et sert à définir le convertisseur 8.

Avantageusement, la loi de commande étant symétrique par rapport à l'axe des ordonnés (figure 4), les tensions de référence utilisées sont identiques en valeur absolue mais opposées en signe (Ref et -Ref) pour chacune des familles. Il est également possible d'utiliser des tensions de références différentes entre les deux familles afin de travailler avec une loi de commande non symétrique. Pour la mise en oeuvre de la loi de commande illustrée à la figure 4, la tension Ref_{b} correspond à la tension Ref₁ et la tension Ref_{c} (non représentée) correspond à la tension Ref₂.

A titre d'exemple, les comparateurs 11 b et 11b' appartiennent à deux familles différentes. La différence Err entre la tension de consigne et la tension Vdb est appliquée sur la première borne d'entrée du comparateur 11 b alors que la même différence Err est appliquée sur la seconde borne d'entrée du comparateur 11b'. Les tensions de référence associées aux comparateurs 11 b et 11 b' sont identiques en valeur absolue mais opposées en signe, Ref_{b} et -Ref_{b}.

De plus, à chaque tension de référence Ref est associée une source de courant I spécifique. De sorte que le comparateur 11b est associé à la tension de référence Ref_{b} et à la source 13 de courant I_{b} par l'intermédiaire d'un interrupteur électronique 12. Pour sa part, le comparateur 11b' est associé à la tension de référence -Ref_{b} et à la source de courant -I_{b} par l'intermédiaire d'un interrupteur électronique. De manière analogue, le comparateur 11i est connecté à la tension de référence Refᵢ et agit sur l'interrupteur électronique relié à la source de courant Iᵢ.

Ainsi, si la différence Err est comprise entre Refa et Ref_{b}, le comparateur 11a délivre en sortie un signal qui actionne la fermeture de l'interrupteur électronique 12a. Il en résulte qu'un courant Iₐ est appliqué à l'entrée du circuit intégrateur 18, le courant Iₐ étant proportionnel au gain G1. Si la différence Err est supérieure au moins à Ref_{b}, au moins les comparateurs 11a et 11b délivrent chacun en sortie un signal qui actionne la fermeture des interrupteurs électroniques 12a et 12b. Il en résulte alors qu'un courant au moins égale à Iₐ+I_{b} est appliqué à l'entrée du circuit 18, le courant Iₐ+I_{b} étant proportionnel au gain G2.

Dans un autre mode de réalisation particulier, non représenté, le comparateur 11b n'est pas utilisé et l'interrupteur et la source de courant qui lui étaient associé sont connectés au signal de la sortie du comparateur 11a, qui a été préalablement transformé en son opposé. Dans ce mode de réalisation, le comparateur 11a appartient toujours au convertisseur 8, mais sa sortie inversée fait partie des moyens 10 de contrôle.

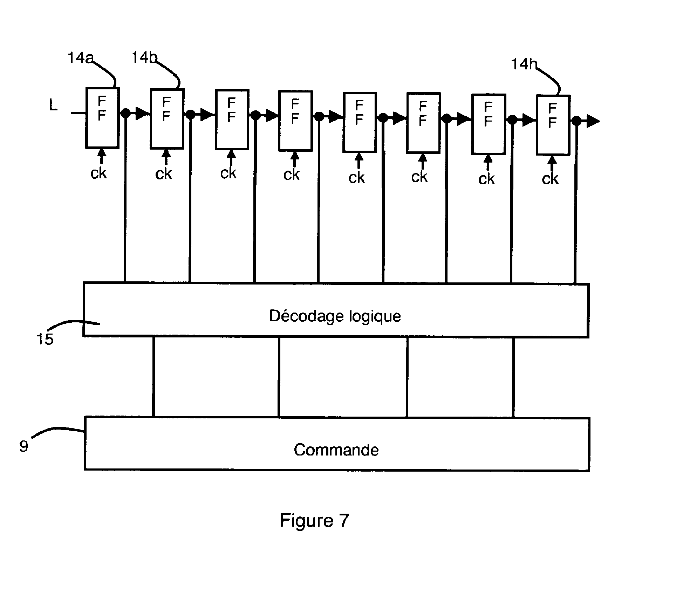

Dans un autre mode de réalisation particulier illustré à la figure 7 et correspondant au second mode de réalisation illustré à la figure 5, la valeur du gain est fonction de la durée pendant laquelle la valeur du signal numérique représentatif de la différence Err est constant, c'est-à-dire toujours égale à 1 ou toujours égale à 0. Dans ce mode de réalisation particulier, les moyens 10 de contrôle du gain comportent des moyens d'intégration temporelle du signal appliqué à leur entrée.

Dans ce mode de réalisation particulier, les moyens 10 de contrôle du gain comportent une pluralité de bascules 14 de type « flip-flop » ou FF qui sont connectées en série. Chaque bascule 14 « flip-flop » comporte une borne d'entrée de signal, une borne de sortie de signal et une borne d'entrée d'un signal d'horloge ck. La borne d'entrée d'une bascule 14 est connectée à la borne de sortie de la bascule précédente et la borne de sortie de la bascule est connectée à la borne d'entrée de la bascule suivante. De plus, toutes les bornes d'entrée de signal d'horloge sont connectées au même signal d'horloge ck. Les différentes bascules 14 sont donc synchronisées. Ainsi, au fur et à mesure des signaux d'horloges, les bits délivrés par le convertisseur 8 analogique-numérique transitent par les différentes bascules. Sur la figure 7, les bits délivrés par le convertisseur 8 passent, depuis le noeud électrique L, à travers des huit bascules flip-flop depuis la bascule 14a jusqu'à la bascule 14h. Chacune des bascules représente alors la valeur du signal numérique représentatif de la différence à un instant donné.

Les bornes de sortie de signal de chaque bascule 14 sont également connectées à un circuit de décodage logique 15. Ce circuit de décodage logique permet de contrôler les variations temporelles du signal numérique représentatif de la différence. Ainsi, si le signal représente une alternance parfaite de 0 et 1, c'est-à-dire d'états hauts et d'états bas, le circuit de décodage délivre un gain minimum. En revanche, plus les écarts à cette alternance sont importants et plus le circuit de décodage délivre un gain important, en fonction de la loi de commande intégrée au circuit de décodage 15 par l'intermédiaire des moyens 10 de commande. Il est également possible et avantageux de prendre en compte la position de l'écart à l'alternance dans le calcul de la valeur du gain. Ainsi, si l'écart à une alternance parfaite est présent à la bascule 14h, le gain sera plus faible que si le même écart est présent à la bascule 14a.

L'objet portatif 1 comporte également des moyens 17 de démodulation qui sont connectés entre le convertisseur 8 analogique-numérique et les moyens de commande 9. Les moyens de démodulation utilisent le signal numérique émis par le convertisseur 8 pour traiter l'information contenue dans le champ magnétique H émis depuis la station fixe vers l'objet portatif. Les moyens 17 de démodulation sont connectés au noeud électrique L.

Dans un autre mode de réalisation qui peut être avantageusement combiné avec les modes de réalisation précédents, la boucle de régulation est partiellement ou totalement désactivée lors de la phase de variation de l'impédance de charge. Cette désactivation permet d'éviter un conflit avec la modulation de l'impédance. La demande de brevet WO 2005/029726 décrit, par exemple, une architecture particulière. Il est alors possible de forcer un signal périodique à l'entrée d'un contrôleur bang-bang, tout en déconnectant la sortie du filtre de boucle de l'impédance de charge variable.

Dans un mode de réalisation particulier qui peut mis en oeuvre avec ce qui a été décrit précédemment, le circuit peut renvoyer des données de l'objet vers la station fixe. Pour envoyer des données, l'objet portatif modifie l'impédance qu'il présente aux bornes de son antenne. En conséquence, l'impédance rapportée du côté de la station fixe est modifiée. Les données sont alors codées par des variations de charge de l'objet portatif.

Dans son fonctionnement classique, la boucle de régulation rejette toutes les perturbations qui se présentent aux bornes du circuit. De ce fait, la boucle de régulation entre en conflit avec la variation de charge inhérente au principe de communication par modulation de charge. Il est donc nécessaire de limiter, ou au moins de modifier, l'effet de la boucle de régulation pendant une communication de l'objet portatif vers la station fixe.

Cette limitation peut être réaliser, par exemple, en figeant l'état de la boucle de régulation pendant les phases de communication de phase. Cette état figé peut être réalisé en forçant le signal périodique à l'entrée du contrôleur bang-bang. A titre d'exemple, des moyens de coupure du signal, par exemple un interrupteur électronique, sont disposés entre les moyens 7 de détermination de la différence 7 et le convertisseur 8 analogique-numérique. Une fois le convertisseur 8 déconnecté des moyens 7 de détermination, une erreur périodique est appliquée à l'entrée du convertisseur 8 par des moyens d'application d'un signal périodique (non représentés). Durant cette phase, une tension Vₛₕᵤₙₜ constante est appliquée sur l'impédance de charge variable Z.

## Revendications

1. Objet portatif muni d'une antenne (3) couplée inductivement à une station fixe (2) d'un dispositif de télétransmission, l'objet portatif (1) comportant une impédance de charge (Z) variable connectée en parallèle aux bornes de l'antenne (3), et un redresseur (5) dont l'entrée est connectée à une borne de cette antenne(3), une boucle de régulation (6) de la tension aux bornes de l'impédance de charge (Z), connectée entre la sortie du redresseur (5) et une borne de commande de l'impédance de charge (Z), la boucle de régulation (6) comportant, en série, des moyens (7) de détermination d'une différence entre une tension de consigne (V_{consigne}) et la tension (Vdb) de sortie du redresseur, un convertisseur analogique-numérique (8), à un bit, et des moyens de commande (9) de type intégrateur, des moyens de démodulation (17) étant connectés à la sortie du convertisseur (8), objet **caractérisé en ce que** les moyens de commande (9) sont à gain variable et comportent une entrée (M) de contrôle de gain, connectée à une sortie de moyens (10) de contrôle du gain recevant en entrée des signaux représentatifs de ladite différence (Err).

2. Objet selon la revendication 1, **caractérisé en ce que** le redresseur (5) est connecté en parallèle aux bornes de l'antenne (3).

3. Objet selon l'une des revendications 1 et 2, **caractérisé en ce que** lesdits signaux représentatifs sont la différence (Err) entre la tension de consigne (V_{consigne}) et la tension (Vdb) de sortie du redresseur (5).

4. Objet selon l'une des revendications 1 et 2, **caractérisé en ce que** lesdits signaux représentatifs sont la différence (Err) entre la tension de consigne (V_{consigne}) et la tension (Vdb) de sortie du redresseur (5) convertie par le convertisseur analogique-numériques (8).

5. Objet selon la revendication 4, **caractérisé en ce que** les moyens (10) de contrôle du gain comportent des moyens (14, 15) d'intégration temporelle des signaux représentatifs.

6. Objet selon l'une quelconque des revendications 1 à 5, **caractérisé en ce qu'**il comporte des moyens de coupure du signal disposés entre le convertisseur (8) et les moyens (7) de détermination de l'erreur, et des moyens d'application d'un signal périodique à une entrée du convertisseur (8).

## Claims

1. A portable object equipped with an antenna (3) inductively coupled to a fixed station (2) of a remote transmission device, the portable object (1) comprising a variable load impedance (Z) connected in parallel to the terminals of the antenna (3) and a rectifier with an input connected to a terminal of the antenna (3), a regulation loop (6) of the voltage at the terminals of the load impedance, connected between the rectifier (5) output and a control terminal of the load impedance (Z), the regulation loop (6) comprising, in series, means (7) for determining a difference between a setpoint voltage (V_{consigne}) and the output voltage (V_{db}) of the rectifier, a one-bit analog-to-digital converter (8), and command means (9) of integrator type, demodulation means (17) being connected to the converter output (8), object **characterized in that** the command means (9) are of adjustable gain type and comprise a gain control input (M) connected to an output of the gain control means (10) receiving signals representative of said difference (Err) on input.

2. The object according to claim 1, **characterized in that** the rectifier (5) is connected in parallel to the terminals of the antenna (3)

3. The object according to one of the claims 1 and 2, **characterized in that** said representative signals are the difference (Err) between the setpoint voltage (V_{consigne}) and the output voltage (V_{db}) of the rectifier (5).

4. The object according to one of the claims 1 and 2, **characterized in that** said representative signals are the difference (Err) between the setpoint voltage (V_{consigne}) and the output voltage (V_{db}) of the rectifier (5) converted by the analog-to-digital converter (8).

5. The object according to claim 4, **characterized in that** the gain control means (10) comprise means (4, 5) for time integration of the representative signals.

6. The object according to any one of the claims 1 to 5, **characterized in that** it comprises cut-off means of the signal connected between the converter (8) and the means (7) for determining the error, and means for applying a periodic signal to an input of the converter (8).

## Patentansprüche

1. Tragbarer Gegenstand, der mit einer Antenne (3) ausgestattet ist, die mit einer festen Station (2) einer Fernübertragungsvorrichtung induktiv gekoppelt ist, wobei der tragbare Gegenstand (1) eine variable Lastimpedanz (Z), die an die Anschlüsse der Antenne (3) parallel angeschlossen ist, einen Gleichrichter (5), dessen Eingang an einen Anschluss dieser Antenne (3) angeschlossen ist, und eine Schleife zum Regeln (6) der Spannung an den Anschlüssen der Lastimpedanz (Z) umfasst, die zwischen dem Ausgang des Gleichrichters (5) und einem Steueranschluss der Lastimpedanz (Z) angeschlossen ist, wobei die Regelschleife (6) in Reihe geschaltet Mittel (7) zur Bestimmung einer Differenz zwischen einer Sollspannung (V_{consigne}) und der Ausgangsspannung (Vdb) des Gleichrichters, einen 1-Bit-Analog-Digital-Wandler (8) sowie Steuermittel (9) vom Typ Integrierer umfasst, wobei Demodulationsmittel (17) an den Ausgang des Wandlers (8) angeschlossen sind, Gegenstand, welcher **dadurch gekennzeichnet ist, dass** die Steuermittel (9) mit variablem Verstärkungsfaktor sind und einen Eingang (M) zur Kontrolle des Verstärkungsfaktors umfassen, der an einen Ausgang von Mitteln (10) zur Kontrolle des Verstärlamgsfaktors angeschlossen ist, die eingangseitig für die Differenz (Err) repräsentative Signale empfangen.

2. Gegenstand nach Anspruch 1, **dadurch gekennzeichnet, dass** der Gleichrichter (5) an die Anschlüsse der Antenne (3) parallel angeschlossen ist.

3. Gegenstand nach einem der Ansprüche 1 und 2, **dadurch gekennzeichnet, dass** die repräsentativen Signale die Differenz (Err) zwischen der Sollspannung (V_{consigne}) und der Ausgangsspannung (Vdb) des Gleichrichters (5) sind.

4. Gegenstand nach einem der Ansprüche 1 und 2, **dadurch gekennzeichnet, dass** die repräsentativen Signale die Differenz (Err) zwischen der Sollspannung (V_{consigne}) und der Ausgangsspannung (Vdb) des Gleichrichters (5), umgewandelt durch den Analog-Digital-Wandler (8) sind.

5. Gegenstand nach Anspruch 4, **dadurch gekennzeichnet, dass** die Mittel (10) zur Kontrolle des Verstärkungsfaktors Mittel (14, 15) zur zeitlichen Integration der repräsentativen Signale umfassen.

6. Gegenstand nach einem der Ansprüche 1 bis 5, **dadurch gekennzeichnet, dass** er Mittel zur Unterbrechung des Signals, die zwischen dem Wandler (8) und den Fehlerbestimmungsmitteln (7) angeordnet sind, sowie Mittel zum Anlegen eines periodischen Signals an einen Eingang des Wandlers (8) umfasst.
